# EUROPÄISCHE PATENTSCHRIFT

(11) **EP 1 070 003 B1**
(45) Veröffentlichungstag und Bekanntmachung des Hinweises auf die Patenterteilung: **13.11.2002**
(21) Anmeldenummer: 99924772.9
(22) Anmeldetag: 30.03.1999
(51) Int. Cl.: B60R 13/02

(54) **VORRICHTUNG ZUR BEFESTIGUNG VON INNENVERKLEIDUNGEN FÜR FAHRZEUGE**
DEVICE FOR FIXING INTERIOR COVERINGS IN MOTOR VEHICLES
DISPOSITIF DE FIXATION DE REVETEMENTS INTERIEURS DESTINE A DES VEHICULES

(30) Priorität: 06.04.1998 DE 19816533
(43) Veröffentlichungstag der Anmeldung: 24.01.2001
(73) Patentinhaber: Brose Fahrzeugteile GmbH & Co. KG Coburg, 96450 Coburg (DE)
(72) Erfinder: PLEISS, Eberhard, D-96253 Untersiemau (DE)
(74) Vertreter: Baumgärtel, Gunnar, Dr.
(86) Internationale Anmeldenummer: DE9901023
(87) Internationale Veröffentlichungsnummer: WO99051461

(56) Entgegenhaltungen:
- EP-A- 0 747 604
- DE-A- 2 502 663
- DE-A- 3 303 254
- DE-A- 3 333 092
- DE-A- 3 517 121
- DE-A- 4 438 309
- DE-A- 19 529 883
- DE-C- 3 424 075
- DE-U- 1 964 030

## Beschreibung

Die Erfindung betrifft eine Vorrichtung zur Befestigung von Innenverkleidungen für Fahrzeuge nach dem Oberbegriff des Anspruchs 1 und dem Oberbegriff des Anspruchs 13.

Es ist bekannt, Kraftfahrzeugtüren in zunehmendem Umfang modular aufzubauen. In den bisher üblichen Modulen wurden drei Baugruppen zusammengefaßt, nämlich das Türaußenblech, das Trägerblech und die Türinnenverkleidung. Das Türaußenblech bildet dabei den Karosserieabschluß und nimmt an dem Türinnenblech das Trägerblech auf, das unter anderem für die Befestigung von Schließvorrichtungen, Lautsprechersystemen, Fensterheberantrieben usw. dient. Die Türinnenverkleidung weist in der Regel eine Armlehne, Lautsprecheröffnungen und Ablagefächer auf und wird als ein Teil der Innenausstattung abschließend montiert.

Durch die beschriebene Aufteilung werden bei der Endmontage die angelieferten und vormontierten drei Baugruppen nacheinander zusammengebaut, wozu zwei Montageoperationen benötigt werden. Um die Innenverkleidung mit den anderen Baugruppen zu verbinden, werden verschiedene Verschraubungsvarianten bzw. Verclipsungen eingesetzt. Beispielsweise erfolgt eine Verschraubung von der Türinnenseite, wobei der Schraubenkopf, um die optische Beeinträchtigung zu mildern, mit einer separaten Kappe abgedeckt wird. Nachteilig daran ist der zusätzliche Arbeitsaufwand mit den damit verbundenen zusätzlichen Kosten sowie die Gefahr, die Kappen zu verlieren bzw. deren Montage zu vergessen.

Weiterhin ist die Möglichkeit der Verschraubung durch das Türaußenblech bzw. durch das Türbodenblech gegeben. Hierbei besteht die Gefahr, daß die bereits lackierte Tür verkratzt wird. Ebenso muß in der Regel eine Abdeckleiste vorhanden sein, was Einschränkungen im Bereich der gestalterischen Freiheit zur Folge hat.

Die Befestigung über Retainerclipse gewährleistet aufgrund der geforderten Demontierbarkeit keine sichere Festlegung der Innenverkleidung, da die Clipse nur begrenzt axiale Kräfte aufnehmen können.

Aus der gattungsgemässen DE-A-44 38 309 ist ein in einer Türinnenverkleidung integrierter drehfester Adapter bekannt, über den durch Eindrücken in Richtung auf das Türinnenblech eine Befestigungsklammer mit radial aufspreizbaren Fingern durch eine Öffnung in der Karosserie geschoben werden kann. Nach dem Durchtritt durch die Öffnung spreizen sich die Finger auf und legen die Türinnenverkleidung an der Karosserie fest. Die Befestigungsklammer kann nur begrenzt axiale Kräfte aufnehmen, da die durch die Öffnung ragenden Finger radial verschieblich sind.

Aus der DE 195 29 883 A1 ist ein Verbindungselement für ein Fahrzeugbauteil bekannt, bei dem eine Schraube in einen Spreizdübelschaft eingedreht wird, so daß sich der Spreizdübelschaft aufweitet und das Bauteil an einer entsprechenden Halterung festlegt. Die Schraube muß dabei vollständig in den Spreizdübelschaft eingeschraubt werden, um eine hinreichend feste Verbindung des zu verbindenden Bauteils mit der Halterung zu bewirken. Ebenso muß zur Demontage die Schraube vollständig herausgedreht werden, wodurch sich hohe Montage- bzw. Demontagekosten und -zeiten ergeben.

Aufgabe der vorliegenden Erfindung ist es, eine Befestigungsvorrichtung bereitzustellen, die eine kostengünstige und einfache Montage einer Innenverkleidung beziehungsweise eines an der Innenverkleidung befestigten Bauteils gewährleistet. Weiterhin soll eine feste und einfach zu demontierende Befestigung gewährleistet sein, ohne daß der optische Gesamteindruck beeinträchtigt wird.

Diese Aufgabe wird durch eine erfindungsgemäße Befestigungsvorrichtung mit den Merkmalen des Anspruchs 1 bzw. des Anspruchs 13 gelöst.

Durch die Integration eines Adapters in die Innenverkleidung entfällt die Montage von separaten Abdeckteilen, die vergessen oder verloren werden können. Ein Abdichten des Schraubloches ist somit ohne eine zusätzliche Verrichtung möglich. Weiterhin ist auf diese Weise eine einfache Befestigung von an der Innenverkleidung montierten Bauteilen wie Fensterheber oder Trägerbleche möglich, die ihrerseits in der Lage sind, höhere Kräfte aufzunehmen.

Obwohl verschiedene Varianten der Einwirkung mittels des Adapters auf das Befestigungsmittel möglich sind, ist eine Drehung und eine Verschiebung üblicherweise am einfachsten zu realisieren. Dazu ist es günstig, daß der Adapter drehbeweglich und axial verschieblich in der Innenverkleidung integriert ist, um so eine einfache und leichte Betätigung zu gewährleisten.

In einer Weiterbildung der Erfindung steht das Befestigungsmittel in Wirkverbindung mit der Innenverkleidung und bildet eine funktionale Einheit. Das Befestigungsmittel ist in einer Variante vorteilhafterweise direkt mit der Innenverkleidung verbunden, so daß eine einfache Zuordnung zu dem Adapter hergestellt werden kann.

In einer Ausgestaltung der Erfindung ist das Befestigungsmittel an einer mit der Innenverkleidung verbundenen Trägerplatte oder einem Fensterheber befestigt, so daß zum Befestigen der Innenverkleidung das Befestigungsmittel nur noch entsprechend seiner Ausgestaltung betätigt werden muß, beispielsweise gedreht oder axial verschoben.

In einer vorteilhaften Ausgestaltung der Erfindung ist der Adapter mit einem Federelement entgegen der Montagerichtung belastet, wodurch er in Richtung der Innenverkleidung gedrückt wird. Dadurch nimmt der Adapter stets eine Position ein, die einen glatten Abschluß der Innenverkleidung zum Innenraum hin gewährleistet. Es ist preiswert und zweckmäßig, das Federelement als ein in die Innenverkleidung integriertes Kunststoffteil auszugestalten.

Insbesondere wenn ein lediglich längsverschieblicher Adapter an einer gekrümmten Fläche angeordnet ist, ist ein Führung in einer Kulisse oder in einem Bewegungsgewinde vorteilhaft, da auf diese Weise sichergestellt ist, daß eine glatte Oberfläche an der Innenverkleidung beim Zurückgleiten des Adapters entsteht, indem der Adapter in die Ausgangsstellung zurückgebracht bzw. gedreht wird. Neben optischen Aspekten ist aus Gründen der Sicherheit ein bündiges Abschließen mit der Innenverkleidung vorteilhaft, da so Verletzungen durch überstehende Kanten vermieden werden.

Als eine kostengünstige und erprobte Ausgestaltungsform des Befestigungsmittels hat sich ein Schraubbolzen herausgestellt. Durch das Verschrauben läßt sich leicht eine feste und gleichzeitig lösbare Verbindung verwirklichen. Ebenso ist die Gestalt des Schraubbolzenkopfes einfach an die jeweiligen Erfordernisse anpaßbar. Durch eine Verschraubung können eventuelle Fertigungsungenauigkeiten problemlos ausgeglichen werden, da eine sehr feine Anpassung an die jeweiligen Bedingungen durch die entsprechende Einschraublänge verwirklicht werden kann.

Zweckmäßigerweise ist an dem Schraubbolzen ein Widerlager angebracht, beispielsweise in Form eines Absatzes, eines Bundes oder einer angeschweißten Scheibe, wodurch der Schraubbolzen nur bis zu dem Widerlager eingeschraubt werden muß, um die Innenverkleidung an dem Türinnenblech festzulegen.

Bei der Gestaltung des Adapters ist es vorteilhaft, wenn der maximale Verschiebeweg des Adapters größer oder gleich der Einschraublänge des Schraubbolzens ist, damit gewährleistet ist, daß die Verschraubung vollständig ausgeführt wird und nicht durch ein frühzeitiges Lösen der Verbindung von Adapter und Schraubbolzen eine mangelhafte Befestigung der Innenverkleidung auftritt.

In einer Variante der Erfindung wird die Innenverkleidung über zumindest einen aufspreizbaren Schnapphaken mit einem einstückig angeformten Verriegelungsbolzen an einem Karosserieteil befestigt. Der Schnapphaken bildet quasi eine Umhüllung, deren Außendurchmesser in einer Montageposition der Öffnung in dem Türaußenblech entspricht, durch die der Schnapphaken zum Zweck der Befestigung durchgeführt wird. Durch Einschlagen oder durch eine Drehung des Verriegelungsbolzens in eine Verriegelungsposition wird der Schnapphaken aufgeweitet und legt somit die Innenverkleidung fest.

Durch den Schnapphaken wird eine sichere Befestigung gewährleistet, mit der auch axiale Kräfte aufgenommen werden können. Die einstückige Anformung reduziert die Teilezahl und gewährleistet eine korrekt Orientierung und Positionierung des Verriegelungsbolzens.

Weiterhin ist eine einfache Montage und Demontage ohne großen Kraftaufwand möglich und die Schnapphaken können im Gegensatz zu den bisher eingesetzten Clipsen nicht brechen.

Vorteilhafterweise ist der Verriegelungsbolzen mit seinem unteren Ende über eine Sollbruchstelle im Bereich der Einführöffnung mit der Innenverkleidung verbunden, so daß durch einmaliges Aufbringen einer Kraft der Verriegelungsbolzen in den Schnapphaken eingeführt werden kann und die Innenverkleidung festlegt. Es ist dabei günstig, wenn das untere Ende des Verriegelungsbolzens paddelförmig ausgebildet ist, also die Breite B größer als die Dicke D des Paddels ist. Dadurch_kann einerseits eine große Spreizwirkung erzielt werden, andererseits kann durch Drehung des Verriegelungsbolzens die Aufspreizung aufgehoben und der Schnapphaken in die anfängliche Montagestellung gebracht werden.

Um eine sichere Beibehaltung der einmal eingenommenen Position des Verriegelungsbolzens zu gewährleisten, ist im unteren Ende des Hohlraumes eine Rastung in einer Verriegelungs- bzw. einer Demontagestellung des Verriegelungsbolzens vorgesehen, was die Montage erleichtert. Zu Kontrollzwecken ist es vorteilhaft, wenn der Verriegelungsbolzen eine Markierung zur Anzeige der Verriegelungsposition aufweist.

Aus Gründen der optischen Anmutung und eines glatten Oberflächenabschlusses weist der Verriegelungsbolzen einen Senkkopf mit einem eingearbeiteten Profil an seinem der Innenverkleidung zugewandten Ende auf.

Um die Spreizung zu erleichtern bzw. zu ermöglichen, ist der Schnapphaken vorteilhafterweise zumindest teilweise geschlitzt.

Anhand von in der Zeichnung dargestellten Ausführungsbeispielen soll der der Erfindung zugrundeliegende Gedanke näher erläutert werden. Es zeigen:
- Figur 1: eine Schnittdarstellung durch eine Kraftfahrzeugtür;
- Figur 2 A-C -: Phasen der Befestigung einer Innenverkleidung in Detaildarstellung;
- Figur 3 A-C -: Phasen der Befestigung mittels eines Schnapphakens und
- Figur 4 -: eine Draufsicht auf einen Adapter.

Aus Gründen der Übersichtlichkeit sind nicht in allen Figuren sämtliche Bezugszeichen aufgeführt. Gleiche Bezugszeichen kennzeichnen aber in unterschiedlichen Figuren gleiche Bauteile.

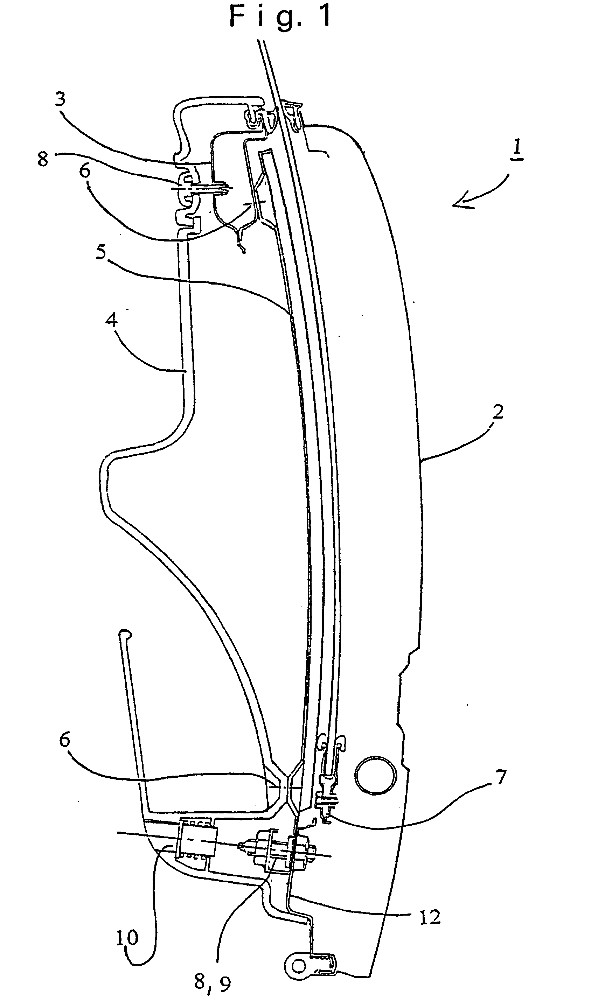

Figur 1 zeigt eine Kraftfahrzeugtür 1 mit einem Türaußenblech 2, einer Innenverkleidung 4 und einer daran befestigten Fensterheberführungsschiene 5. Die Innenverkleidung 4 und die Fensterheberführungsschiene 5 sind über Verbindungselemente 6, beispielsweise Schrauben oder Nieten, fest miteinander verbunden und bilden eine bauliche Einheit. Auf der Fensterheberführungsschiene 5 ist eine Seilumlenkrolle 7 befestigt. Alternativ zu der Fensterheberführungsschiene 5 kann ein Trägerblech oder ein anderes Bauteil an der Innenverkleidung 4 befestigt sein.

Die Innenverkleidung 4 wird im Verlauf der Endmontage im oberen Bereich der Kraftfahrzeugtür 1 mit einer Schachtverstärkung 3 und im unteren Bereich mit dem Türinnenblech 12 über Befestigungsmittel 8 fest verbunden. In der Figur 1 ist der Zustand nach Beendigung der Montage dargestellt. Das Befestigungsmittel 8 für den unteren Bereich ist hier in Gestalt eines Schraubbolzens 9 ausgeführt, der über einen Adapter 10 betätigbar ist.

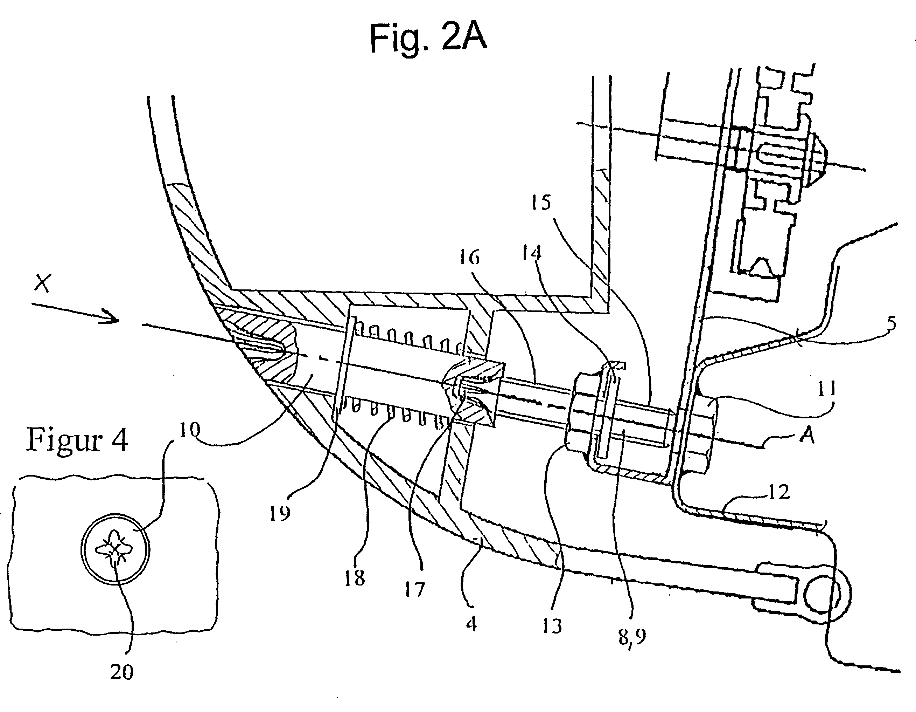

Die Figuren 2 A-C zeigen in einer Phasendarstellung in Detailansicht, wie die Innenverkleidung 4 an dem Türinnenblech 12 befestigt wird. In der Figur 2A ist die Innenverkleidung 4 bereits mit der Schachtverstärkung 3, beispielsweise über eine Verschraubung oder einen Schnapphaken, verbunden und liegt im unteren Bereich an dem Türinnenblech 12 an. An dem Türinnenblech 12 ist ein Gewinde eingearbeitet, in dem vorliegenden Fall ist eine Mutter 11 über einer Bohrung angeschweißt, so daß die Innenverkleidung 4 mit dem Türinnenblech 12 über das korrespondierend auf die Mutter 11 ausgerichtete Befestigungsmittel 8 verschraubt und die Kraftfahrzeugtür 1 fertigmontiert werden kann.

Die Fensterheberführungsschiene 5 ist an ihrem unteren Ende U-förmig umgebogen, wobei an dem dem Türinnenblech 12 abgewandten Schenkel ebenfalls eine Mutter 13 über einer Durchgangsbohrung aufgeschweißt ist. Alternativ dazu kann ein gebogener Metall- oder Kunststoffstreifen mit einem darauf befestigten oder einem eingearbeiteten Gewinde auf der Fensterheberführungsschiene 5 angebracht werden, was eine funktional gleichwertige Lösung darstellt.

In die Mutter 13 ist im Zuge der Vormontage ein Schraubbolzen 9 eingesetzt, an dem als Widerlager eine Scheibe 14 angearbeitet ist. Die Anbringung der Scheibe 14 kann durch Anschweißen oder durch ein anderes Verfahren im Verlauf der Schraubbolzenherstellung erfolgen. Der dem Türinnenblech 12 zugewandte Gewindeabschnitt 15 ragt zweckmäßigerweise nicht oder nur gering über die Fensterheberführungsschiene 5 hinaus. Der der Innenverkleidung 4 zugewandte Gewindeabschnitt 16 entspricht in seiner Länge dem fensterheberführungsschienenseitigen Gewindeabschnitt 15 oder ist geringfügig länger.

An dem verkleidungsseitigen Gewindeabschnitt 16 ist an dem Ende des Schraubbolzens 9 ein kraftübertragendes Profil 17 eingearbeitet oder angebracht. In dem dargestellten Beispiel ist das Schraubbolzenende als ein Vielzahnprofil ausgebildet. Alternativ sind grundsätzlich alle Schraubenkopfformen, die eine Drehmomentübertragung zulassen, möglich, wobei aus fertigungstechnischen Gründen die Profil- bzw. Kopfformen zu bevorzugen sind, die ein Einschrauben des Schraubbolzens 9 von dem Fensterheberführungsschiene 5 her ermöglichen, also deren Außenabmessungen einen Durchgang durch die Mutter 13 zulassen.

In der Innenverkleidung 4 ist der Adapter 10 drehbeweglich und entlang der Achse A verschieblich integriert und weist eine dem Profil 17 des Schraubbolzens 9 entsprechende Ausformung auf, die das Profil 17 umgreift bzw. in das Profil 17 eingreift. Der Adapter 10 schließt bündig mit der Innenverkleidung 4 ab und ist über eine Druckfeder 18 stets mit einer zum Fahrzeuginnenraum weisenden Kraft beaufschlagt, die den Adapter 10 unter normalen Bedingungen in dieser Position hält. Vorzugsweise ist der Adapter 10 rotationssymmetrisch aufgebaut und weist einen Bund 19 auf, der ein Herausgleiten aus der Innenverkleidung 4 verhindert und an dem sich eine Druckfeder 18 abstützt.

Innenraumseitig ist in den Adapter 10 ein Schlitz oder ein anderes Profil 20 eingearbeitet, über das Drehmomente auf den Adapter 10 übertragen werden können. Hier bieten sich Innensechskantprofile, Vielzahnprofile oder, wie in der Figur 4 als Ansicht X dargestellt, ein Kreuzschlitzprofil an.

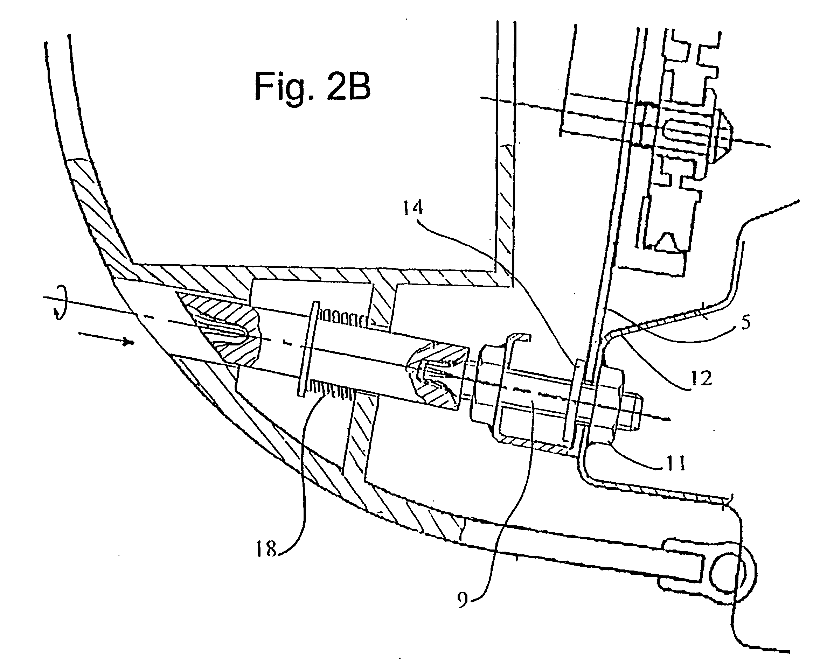

In Figur 2B ist der Schraubbolzen 9 bereits vollständig in die Mutter 11 eingeschraubt, die Scheibe 14 liegt an dem Fensterheberführungsschiene 5 an und befestigt die Fensterheberführungsschiene 5 und die Innenverkleidung 4 über die durch die Verschraubung erzeugten Klemmkräfte an dem Türinnenblech 12. Das Einschrauben des Schraubbolzens 9 erfolgte über ein nicht dargestelltes Werkzeug, mittels dessen der Adapter 10 gedreht und entlang der Achse A in Richtung des Türinnenblechs 12 verschoben wurde, wie durch die Pfeile verdeutlicht wird. Durch die für einen ständigen Formschluß zwischen dem Adapter 10 und dem Schraubbolzen 9 notwendige axiale Verschiebung des Adapters 10 wurde die Druckfeder 18 zusammengedrückt.

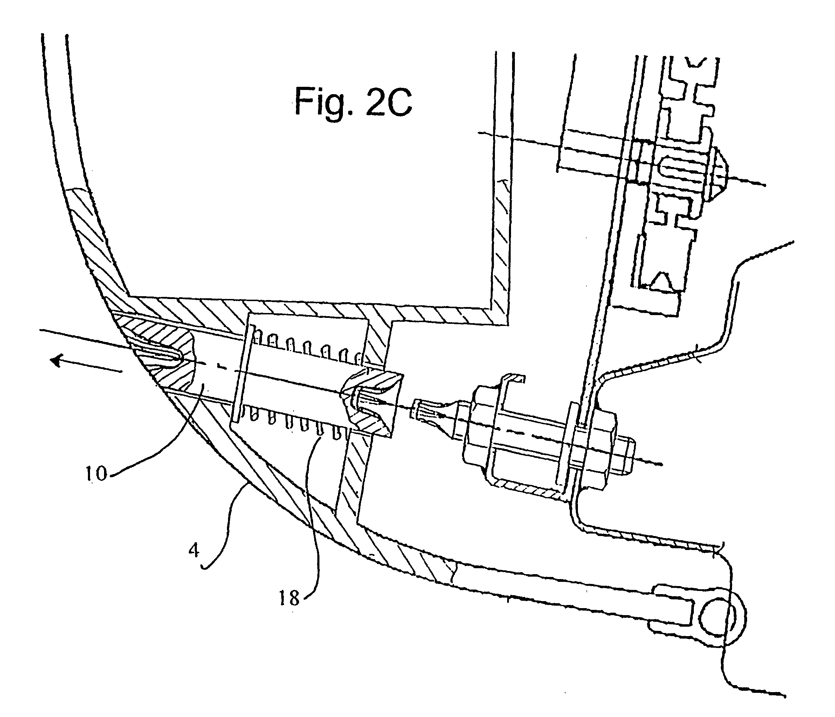

Nach Beendigung des Verschraubens und der Entfernung des Werkzeuges drückt die Druckfeder 18, wie in der Figur 2C dargestellt und durch den Pfeil angedeutet, den Adapter 10 wieder in die Ausgangsposition und verschließt die Schrauböffnung in der Innenverkleidung 4.

Insbesondere bei einer Positionierung des Adapters 10 an einer gekrümmten Fläche der Innenverkleidung 4 kann durch die Verdrehung der Adapter 10 aus seiner vorgesehenen Endposition gebracht werden, so daß ein Teil aus der Innenverkleidung 4 herausragt. Um einen bündigen Abschluß zu erlangen, muß der Adapter 10 im Verlauf der Montage entsprechend ausgerichtet werden. Eine Kulissenführung, zumindest im Endbereich des Rückstellweges des Adapters 10, bewirkt, daß keine aufwendige Anpassung und Ausrichtung zu erfolgen hat, sondern daß nach Beendigung der Verschraubung der Adapter 10 lediglich bis zum Beginn der Kulisse verdreht werden muß und die korrekte Endposition wird zwangsweise eingenommen. Eine Kulissenführung ist insbesondere dann günstig, wenn nur oder überwiegend eine axiale Verschiebung des Adapters vorgenommen wird, um die Innenverkleidung zu befestigen.

Neben der kombinierten Montage von Fensterheber oder Trägerblech und Innenverkleidung 4 ist es vorgesehen, daß das Befestigungsmittel 8, 9 direkt in der Innenverkleidung 4 integriert ist oder daß auf eine andere Art die Wirkverbindung zwischen der Innenverkleidung 4 und dem Türinnenblech 12 hergestellt wird. Dies kann durch gesonderte Verbindungselemente oder durch andere an der Innenverkleidung 4 befestigte Bauteile erfolgen.

Zur Demontage der Innenverkleidung 4 wird der beschriebene Ablauf in umgekehrter Reihenfolge durchgeführt.

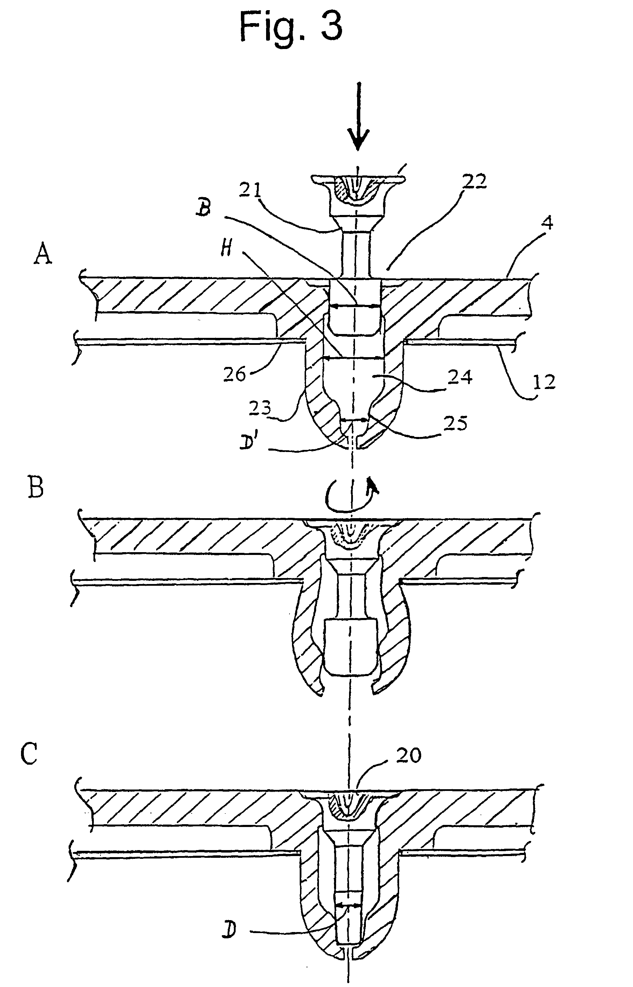

In den Figuren 3 A-C ist der Ablauf der Befestigung der Innenverkleidung 4 an dem Türinnenblech 12 mittels eines Schnapphakens 23 dargestellt. Ein paddelförmig gestalteter Verriegelungsbolzen 21 ist nach Figur 3A einstückig angeformt, beispielsweise angespritzt. Im Bereich der Einführöffnung 22 ist eine Sollbruchstelle vorgesehen, so daß der Verriegelungsbolzen 21 durch Aufbringen einer Kraft in Pfeilrichtung, beispielsweise durch einen Hammerschlag, durch die Einführöffnung 22 in den Schnapphaken 23 eingeführt wird.

An die Einführöffnung 22 schließt sich ein Hohlraum 24 an, der im vorliegenden Ausführungsbeispiel zylindrisch geformt ist und in seinem Durchmesser H ungefähr der größten Breite B des paddelförmigen, unteren Endes des Verriegelungsbolzens 21 entspricht.

Wie in der Figur 3B gezeigt, wird ein solcherart montierter Verriegelungsbolzen 21, nachdem der Schnapphaken 23 durch eine Bohrung in dem Türinnenblech 12 bis zu einem Anschlag 26 eingeführt ist, weiter in den sich verjüngenden Hohlraum 24 eingeführt, wodurch der Schnapphaken 23 aufgespreizt wird und die Befestigung auf dem Türinnenblech 12 bewirkt. Um die Spreizung zu erleichtern bzw. zu ermöglichen, ist der Schnapphaken 23 zumindest teilweise geschlitzt.

In der Figur 3C ist dargestellt, daß der untere, sich verjüngende Teil des Hohlraumes 24 eine der Paddelform entsprechende Ausformung aufweist, so daß durch eine Drehung des Verriegelungsbolzens 21, wie sie durch den Pfeil in der Figur 3B angedeutet ist, der Schnapphaken entweder gespreizt oder in seine Ausgangsform gebracht werden kann. Die Breite D der Ausformung entspricht dabei der Paddeldicke D' oder ist geringfügig größer. Dadurch ist es möglich, durch eine Drehung um 90° die Befestigungswirkung aufzuheben und die Innenverkleidung 4 einfach zu demontieren. Da, anders als bei herkömmlichen Clipsen, nach dem Drehen in eine Demontagestellung keine Haltekräfte wirken, ist eine Demontage ohne Kraftaufwand möglich und die Schnapphaken 23 können nicht abbrechen.

Der Querschnitt des Hohlraumes 24 muß nicht unbedingt rund sein. Ebenso ist eine der Paddelform entsprechende Ausgestaltung möglich, wobei die Verjüngung 25 und die Längsausdehnung der Ausformung am unteren Ende des Hohlraumes 24 winkelig zu der Längsausdehnung des Querschnittes verläuft, vorzugsweise rechtwinkelig.

Neben den vorgesehenen Rastungen in der Montage- bzw. Verriegelungsstellung, kann eine zweistufige Verbindung mittels Schnapphaken 23 erfolgen, wobei in einer ersten Stufe eine teilweise Aufspreizung in einer Stellung 45° verdreht zu der Montagestellung des Verriegelungsbolzens 21 erfolgt, um ein Bauteil an der Innenverkleidung 4 vorzumontieren. Anschließend erfolgt durch Drehen um weitere 45°, analog zu der oben beschriebenen Vorgehensweise, die Verbindung des Innenverkleidung 4 mit dem Türinnenblech 12.

Für einen glatten Abschluß mit der Innenverkleidung 4 weist der Verriegelungsbolzen 21 einen Senkkopf auf, in dem verschiedene Profilformen 20, z.B. Innensechskant oder Kreuzschlitz, für den Eingriff eines Werkzeuges eingearbeitet sind. Der Verriegelungsbolzen 21 kann somit bündig mit der Innenverkleidung 4 abschließen und in eine Verriegelungsoder Demontageposition gedreht werden.

Die oben beschriebenen Befestigungsvorrichtungen sind nicht auf Innenverkleidungen von Kraftfahrzeugtüren beschränkt, sondern können auch an anderen, vorzugsweise in Verbindung zum Fahrzeuginnenraum stehenden Fahrzeugkomponenten eingesetzt werden.

### Bezugszeichenliste

- 1: - Kraftfahrzeugtür
- 2: - Türaußenblech
- 3: - Schachtverstärkung
- 4: - Innenverkleidung
- 5: - Fensterheberführungsschiene
- 6: - Verbindungsmittel
- 7: - Seilumlenkrolle
- 8: - Befestigungsmittel
- 9: - Schraubbolzen
- 10: - Adapter
- 11: - Mutter
- 12: - Türinnenblech
- 13: - Mutter
- 14: - Scheibe
- 15: - Gewindeabschnitt
- 16: - Gewindeabschnitt
- 17: - Profil
- 18: - Druckfeder
- 19: - Bund
- 20: - Profil
- 21: - Verriegelungsbolzen
- 22: - Einführöffnung
- 23: - Schnapphaken
- 24: - Hohlraum
- 25: - Verjüngung
- 26: - Anschlag
- A: - Achse
- B: - Breite des Verriegelungsbolzens
- D': - Dicke des Verriegelungsbolzens
- D: - Breite der Ausformung
- H: - Hohlraumdurchmesser

## Patentansprüche

1. Vorrichtung zur Befestigung einer Innenverkleidung (4) für Fahrzeuge, insbesondere für Kraftfahrzeugtüren, mit einem in der Innenverkleidung (4) integriertem Adapter (10), über den ein Befestigungsmittel (8, 9, 23) zur Befestigung der Innenverkleidung (4) und/oder eines an der Innenverkleidung (4) befestigten Bauteils (5) an einem Karosserieteil (12) betätigbar ist,
**dadurch gekennzeichnet,**
**daß** der Adapter (10) drehbeweglich ausgebildet ist.

2. Vorrichtung nach Anspruch 1, **dadurch gekennzeichnet, daß** der Adapter (10) axial verschieblich in der Innenverkleidung (4) integriert ist.

3. Vorrichtung nach zumindest einem der voranstehenden Ansprüche, **dadurch gekennzeichnet, daß** das Befestigungsmittel (8, 9) in Wirkverbindung mit der Innenverkleidung (4) steht.

4. Vorrichtung nach Anspruch 3, **dadurch gekennzeichnet, daß** das Befestigungsmittel (8,9) direkt mit der Innenverkleidung (4) verbunden ist.

5. Vorrichtung nach zumindest einem der voranstehenden Ansprüche, **dadurch gekennzeichnet, daß** das Befestigungsmittel (8, 9) an einer mit der Innenverkleidung (4) verbundenen Trägerplatte oder einem Fensterheber befestigt ist.

6. Vorrichtung nach zumindest einem der voranstehenden Ansprüche, **dadurch gekennzeichnet, daß** der Adapter (10) mit einem Federelement (18) entgegen der Montagerichtung belastet ist.

7. Vorrichtung nach Anspruch 5, **dadurch gekennzeichnet, daß** das Federelement als ein integriertes Kunststoffteil ausgeführt ist.

8. Vorrichtung nach zumindest einem der voranstehenden Ansprüche, **dadurch gekennzeichnet, daß** der Adapter (10) bündig mit der Innenverkleidung (4) abschließt.

9. Vorrichtung nach zumindest einem der voranstehenden Ansprüche, **dadurch gekennzeichnet, daß** der Adapter (10) bei lediglich axialer Verschieblichkeit in einer Kulisse geführt ist.

10. Vorrichtung nach zumindest einem der voranstehenden Ansprüche, **dadurch gekennzeichnet, daß** das Befestigungsmittel (8) als Schraubbolzen (9) ausgeführt ist.

11. Vorrichtung nach Anspruch 10, **dadurch gekennzeichnet, daß** an dem Schraubbolzen (9) ein Widerlager (14), z.B. als Bund ausgeführt, angebracht ist.

12. Vorrichtung nach zumindest einem der voranstehenden Ansprüche, **dadurch gekennzeichnet, daß** der maximale axiale Verschiebeweg des Adapters (10) größer oder gleich der Einschraublänge des Schraubbolzens (9) ist.

13. Vorrichtung nach zumindest einem der voranstehenden Ansprüche, **dadurch gekennzeichnet, daß** an der Innenverkleidung (4) als Befestigungsmittel ein aufspreizbarer Schnapphaken (23) mit einem zugeordneten Verriegelungsbolzen (21) integriert ist und daß der Schnapphaken (23) zapfenförmig ausgebildet ist und im Inneren einen Hohlraum (24) auf weist, in dem eine zum unteren Ende des Verriegelungsbolzens (21) korrespondierende Aufnahme ausgebildet ist, wobei das untere Ende des Verriegelungsbolzens (21) im Verhältnis zu dessen Dicke (D') eine größere Breite (B) aufweist.

14. Vorrichtung nach Anspruch 13, **dadurch gekennzeichnet, daß** der Verriegelungsbolzen (21) mit seinem unteren Ende über eine Sollbruchstelle im Bereich der Einführöffnung (22) mit der Innenverkleidung (4) verbunden ist.

15. Vorrichtung nach Anspruch 13 oder 14, **dadurch gekennzeichnet, daß** das untere Ende des Verriegelungsbolzens (21) paddelförmig ausgebildet ist.

16. Vorrichtung nach einem der Ansprüche 13 bis 15, **dadurch gekennzeichnet, daß** in dem unteren Ende des Hohlraumes (24) eine Rastung in einer Verriegelungsund/oder einer Demontagestellung des Verriegelungsbolzens (21) vorgesehen ist.

17. Vorrichtung nach zumindest einem der Ansprüche 13 bis 16, **dadurch gekennzeichnet, daß** der Verriegelungsbolzen (23) eine Markierung zur Anzeige der Verriegelungsposition aufweist, z.B. in Form einer fluchtenden Einkerbung oder Farbgestaltung.

18. Vorrichtung nach zumindest einem der Ansprüche 13 bis 17, **dadurch gekennzeichnet, daß** der Verriegelungsbolzen (21) einen Senkkopf mit einem Profil (20) aufweist.

19. Vorrichtung nach zumindest einem der Ansprüche 13 bis 18, **dadurch gekennzeichnet, daß** der Schnapphaken (23) zumindest teilweise geschlitzt ist.

## Claims

1. Device for fixing an interior covering (4) in vehicles, more particularly motor vehicle doors, with an adapter (10) integrated in the interior covering (4) and through which a fixing means (8, 9, 23) can be operated for fixing the interior covering (4) and/or a component part (5) fixed on the interior covering (4) to a bodywork part (12),
**characterised in that**
the adapter (10) is formed rotationally movable.

2. Device according to claim 1 **characterised in that** the adapter (10) is integrated axially displaceable in the interior covering (4).

3. Device according to at least one of the preceding claims **characterised in that** the fixing means (8, 9) are in active connection with the interior covering (4).

4. Device according to claim 3 **characterised in that** the fixing means (8,9) are connected directly to the interior covering (4).

5. Device according to at least one of the preceding claims **characterised in that** the fixing means (8, 9) are fixed on a window lifter or on a support plate connected to the interior covering (4).

6. Device according to at least one of the preceding claims **characterised in that** the adapter (10) is biased by a spring element (18) against the assembly direction.

7. Device according to claim 5 **characterised in that** the spring element is formed as an integrated plastics part.

8. Device according to at least one of the preceding claims **characterised in that** the adapter (10) closes flush with the interior covering (4).

9. Device according to at least one of the preceding claims **characterised in that** the adapter (10) is guided in a slide guide with only an axial displaceability.

10. Device according to at least one of the preceding claims **characterised in that** the fixing means (8) are formed as a screw bolt (9).

11. Device according to claim 10 **characterised in that** an abutment (14) for example designed as a collar, is attached to the screw bolt (9).

12. Device according to at least one of the preceding claims **characterised in that** the maximum axial displacement path of the adapter (10) is greater than or equal to the screw-in length of the screw bolt (9).

13. Device according to at least one of the preceding claims, **characterised in that** an expanding snap-hook (23) with associated locking bolt (21) is integrated on the interior covering (4) as fixing means and that the snap hook (23) is shaped stud-like and has on the inside a hollow cavity (24) in which a socket is formed corresponding to the lower end of the locking bolt (21), with the lower end of the locking bolt (21) having a greater width (B) compared to the thickness (D').

14. Device according to claim 13 **characterised in that** the locking bolt (21) is connected by its lower end to the interior covering (4) through an ideal break point in the area of the insert opening (22).

15. Device according to claim 13 or 14 **characterised in that** the lower end of the locking bolt (21) is formed paddle-shaped.

16. Device according to one of claims 13 to 15 **characterised in that** in the lower end of the hollow cavity (24) a detent catch is provided in a locking and/or dismantling position of the locking bolt (21).

17. Device according to at least one of claims 13 to 16 **characterised in that** the locking bolt (23) has markings for indicating the locking position, e.g. in the form of aligned notches or colour configurations.

18. Device according to at least one of claims 13 to 17 **characterised in that** the locking bolt (21) has a countersunk head with a profile (20).

19. Device according to at least one of claims 13 to 18 **characterised in that** the snap hook (23) is slit at least in part.

## Revendications

1. Dispositif de fixation d'un habillage intérieur (4) pour des véhicules, en particulier pour des portes de véhicules automobiles, comportant un adaptateur (10) qui est intégré dans l'habillage intérieur (4) et via lequel peut être actionné un moyen de fixation (8, 9, 23) pour la fixation de l'habillage intérieur (4) et/ou d'un composant (5) fixé sur l'habillage intérieur (4) sur une pièce de carrosserie (12), **caractérisé en ce que** l'adaptateur (10) est réalisé mobile en rotation.

2. Dispositif selon la revendication 1, **caractérisé en ce que** l'adaptateur (10) est intégré de façon mobile en translation axiale dans l'habillage intérieur (4).

3. Dispositif selon l'une des revendications précédentes, **caractérisé en ce que** le moyen de fixation (8, 9) est en liaison d'action avec l'habillage intérieur (4).

4. Dispositif selon la revendication 3, **caractérisé en ce que** le moyen de fixation (8, 9) est relié directement à l'habillage intérieur (4).

5. Dispositif selon l'une des revendications précédentes, **caractérisé en ce que** le moyen de fixation (8, 9) est fixé sur une plaque de support reliée à l'habillage intérieur (4) ou sur un lève-vitre.

6. Dispositif selon l'une des revendications précédentes, **caractérisé en ce que** l'adaptateur (10) est chargé par un élément élastique (18) en sens opposé à la direction de montage.

7. Dispositif selon la revendication 5, **caractérisé en ce que** l'élément élastique est réalisé sous forme de pièce intégrée en matière plastique.

8. Dispositif selon l'une des revendications précédentes, **caractérisé en ce que** l'adaptateur (10) se termine en affleurement avec l'habillage intérieur (4).

9. Dispositif selon l'une des revendications précédentes, **caractérisé en ce que** dans le cas d'une mobilité uniquement en translation axiale, l'adaptateur (10) est guidé dans une coulisse.

10. Dispositif selon l'une des revendications précédentes, **caractérisé en ce que** le moyen de fixation (8) est réalisé sous forme de boulon (9).

11. Dispositif selon la revendication 10, **caractérisé en ce qu'**une contre-butée (14), réalisée par exemple sous forme de collerette, est agencée sur le boulon (9).

12. Dispositif selon l'une des revendications précédentes, **caractérisé en ce que** le trajet de déplacement axial maximal de l'adaptateur (10) est supérieur ou égal à la longueur de vissage du boulon (9).

13. Dispositif selon l'une des revendications précédentes, **caractérisé en ce que** sur l'habillage intérieur (4) est intégré, à titre de moyen de fixation, un crochet d'encliquetage (23) susceptible d'être écarté comportant un goujon de verrouillage associé (21), et **en ce que** le crochet d'encliquetage (23) est réalisé en forme de tenon et présente à l'intérieur une cavité (24) dans laquelle est ménagé un logement correspondant à l'extrémité inférieure du goujon de verrouillage (21), l'extrémité inférieure du goujon de verrouillage (21) présentant une largeur (B) plus grande que son épaisseur (D').

14. Dispositif selon la revendication 13, **caractérisé en ce que** le goujon de verrouillage (21) est relié par son extrémité inférieure à l'habillage intérieur (4) via un emplacement destiné à la rupture dans la zone de l'ouverture d'introduction (22).

15. Dispositif selon l'une ou l'autre des revendications 13 et 14, **caractérisé en ce que** l'extrémité inférieure du goujon de verrouillage (21) est réalisée en forme de pale.

16. Dispositif selon l'une des revendications 13 à 15, **caractérisé en ce que** dans l'extrémité inférieure de la cavité (24) est prévu un cran d'enclenchement dans une position de verrouillage et/ou de démontage du goujon de verrouillage (21).

17. Dispositif selon l'une des revendications 13 à 16, **caractérisé en ce que** le goujon de verrouillage (23) présente un marquage pour afficher la position de verrouillage, par exemple sous forme d'une entaille en alignement ou d'une coloration.

18. Dispositif selon l'une des revendications 13 à 17, **caractérisé en ce que** le goujon de verrouillage (21) comprend une tête conique présentant un profil (20).

19. Dispositif selon l'une des revendications 13 à 18, **caractérisé en ce que** le crochet d'encliquetage (23) est au-moins partiellement fendu.
